# EUROPEAN PATENT SPECIFICATION

(11) **EP 0 339 440 B1**
(45) Date of publication and mention of the grant of the patent: **08.06.1994**
(21) Application number: 89106956.9
(22) Date of filing: 19.04.1989
(51) Int. Cl.: A23F 3/14, A23F 3/34, A47J 31/00

(54) **Product and apparatus for obtaining alimentary, medicinal and dietetic beverages**
Produkt und Vorrichtung zur Herstellung von Nahrungs-, Medizin- oder Diätgetränken
Produit et appareil pour obtenir des boissons alimentaires, médicinales et diététiques

(30) Priority: 27.04.1988 IT 2034088
(43) Date of publication of application: 02.11.1989
(73) Proprietor: ABOCA di Mercati Valentino & C. S.n.c., I-52037 Sansepolcro (Arezzo) (IT)
(72) Inventor: Mercati, Valentino, Citta' di Castello (PG) (IT)
(74) Representative: Dr. Ing. A. Racheli & C. S.r.l.

(56) References cited:
- EP-A- 0 011 332
- EP-A- 0 112 086
- EP-A- 0 249 853
- BE-A- 444 463
- DE-A- 2 535 234
- FR-A- 840 065
- FR-A- 1 171 363
- FR-A- 2 358 835
- FR-A- 2 515 497
- US-A- 3 030 874
- US-A- 3 044 388
- US-A- 4 640 842
- PATENT ABSTRACTS OF JAPAN, vol. 5, no. 4 (C-88)[676], 13th Jauary 1981; & JP-A-55 131 372 (OOYAMA TEKKOSHO K.K.) 13-10-1990

## Description

This invention concerns a method and an apparatus for obtaining alimentary, medicinal and dietetic beverages.

At present, procedures such as decoction, infusion and percolation are used, immerging the substance as it is in boiling water for a few minutes and then filtering it, or using filter bags.

With these methods, however, total uniformity of the beverage is not obtained, since too many variables come to light in the preparation, such as time, the quantity of water and the product, the speed and temperature of extraction.

Constancy of the above parameters is beneficial for aromatic and nutritious beverages, and it is essential for use in medicine with highly active herbs, such as senna, passiflora and others.

With the use of the present day methods this is not possible, thus restricting the field of use of medicinal herbs as such, which could, however, have their own special part to play in therapy.

The aim of the present invention is to prepare medicinal, alimentary and dietetic beverages with substantially uniform characteristics.

The above aim has been achieved with a method as in claim 1 and an apparatus as in claim 4.

Preferably the dust should be removed from the said product, that is by passing it through a sieve having a mesh of about 0.5 mm.

The apparatus suitable for producing the beverage is a normal express coffee machine in which, as is known, the water is superheated and is forced through the product concerned by the pressure of the steam. This machine is modified by providing a distributor at the entrance of the product container, realized with a spiral and a series of holes which are crossed by the water coming into it, so as to affect the whole surface of the container which is turned towards the inlet of this fluid. The said container also has a constant volume, so that the quantity of product used is always the same.

Preferably the distributor can be pushed against the product by a resilient element, in particular a disappearing helical spring.

The beverage obtained using the method and apparatus described has, above all, constant concentration and therefore excellent taste. In addition the speed of the extraction procedure allows a greater percentage of volatile substances to be extracted; on the other hand, only a minimum part of disagreeable substances is extracted, which passes into solution only at a very slow rate.

The special blending of the product and the use of the appropriate apparatus allow a reduction of about 50% in the product used compared with present day methods.

In addition total uniformity of the beverage is obtained, the parameters described above (time, quantity of water and of product, speed and temperature of extraction) being fixed.

With the present invention, therefore, a more rational use of medicinal, alimentary and dietetic herbs will be possible, by predetermining with precision the quantity and quality of the content of the active principles contained in this type of beverage.

In addition, such apparatus can be used both in extracting machines for home use and in express machines on public premises.

The present invention will now be explained with an embodiment which is shown in the enclosed drawings, in which:
Fig. 1 is an exploded perspective view of an apparatus according to the present invention;
Fig. 2 is a perspective view of the proposed distributor, from the water inlet side.

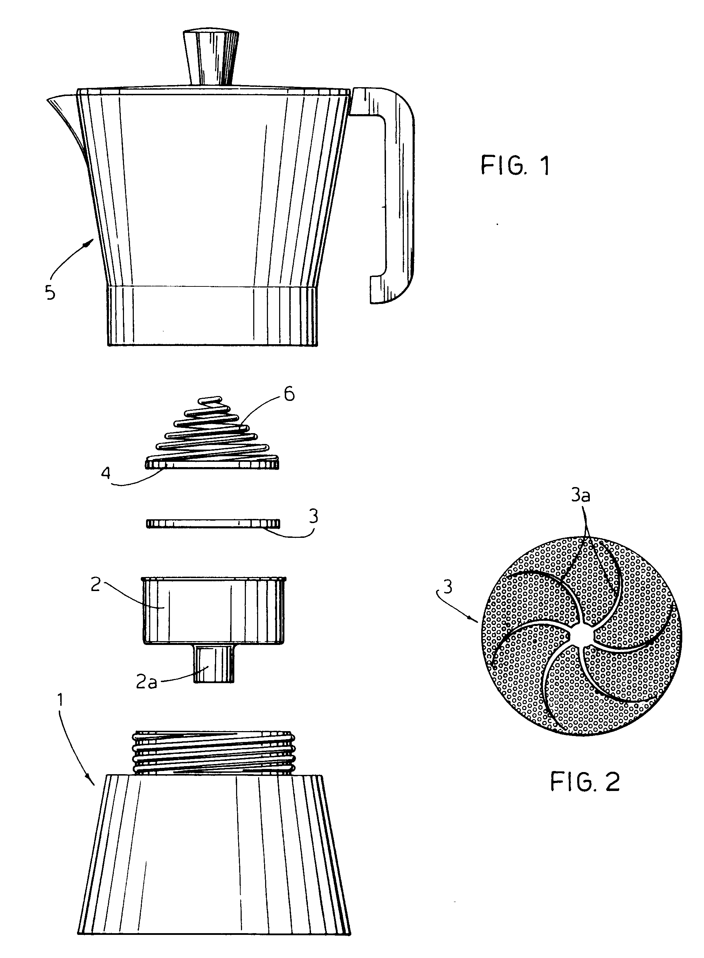

The apparatus for home preparation of infusions consists of: a tank 1 which is filled with water, a container 2 for the product which is placed on top of the tank. This comprises a disk-shaped distributing means 3 having helical incisions 3a (fig. 2). This disk 3 is, in this case, integral with the container 2, but it could also be produced as a separate part. The disk 3 is always positioned at the water inlet 2a. The product can then be pressed down by a pressing means consisting of another disk 4 with holes on which a spring 6 acts. This can with advantage be of the disappearing helical type, as shown in fig. 1.

In express machines of the type used on public premises, water enters from the top, therefore in these machines the distributing means 3 is located on top of the container 2. In this case the disks 3 and 4 can coincide, that is the disk 3 can be used also as a pressing means by the provision of the spring 6 on the same.

The apparatus is completed by screwing the upper part 5 on to the tank 1.

## Claims

1. A method for preparing alimentary, medicinal and dietetic beverages by using a product having a maximum size of 1.8 mm comprising the following steps:
a) filling a tank with water
b) positioning a container for the product on the top of the tank, said container being provided with an inlet hole connected to the tank and an outlet hole
c) positioning a distributing means provided with helical incisions between the inlet hole and the container, so that the water under pressure coming from the tank is uniformly distributed on the product.

2. A method according to claim 1, characterized in that for the preparation of beverages a product is used, such as: tea, medicinal herbs, aromatic herbs, dried fruit, seeds of all kinds, both toasted and untoasted.

3. A method according to claim 1 and 2, characterized in that the minimum size of said small pieces exceeds 0.5 mm, so as to exclude the presence of dust.

4. An apparatus for the preparation of alimentary, medicinal and dietetic beverages, comprising a tank (1) under pressure, a container (2) for the product having an inlet hole (2a) connected to the tank and an outlet hole, characterized in that it also comprises a distributing means (3), positioned between the inlet hole and the container (2), and provided with helical incisions (3a), so that the water coming from the tank (1) is uniformly distributed on the surface of the product which faces the water inlet hole (2a).

5. An apparatus according to claim 4, characterized in that a pressing means (4) is foreseen on the upper portion of the container (2) for the product.

6. An apparatus according to claim 5, characterized in that the pressing means is a disk with holes (4) on which a resilient means (6) acts.

7. An apparatus according to claim 6, characterized in that the resilient means is a disappearing spring (6) such that exerts a uniform pressure on the product to be extracted.

8. An apparatus according to any one of claims 4 to 7, characterized in that the pressing means (4) coincides with the distributing means (3).

## Patentansprüche

1. Verfahren zur Herstellung von Nahrungs-, Medizin-und Diätgetränken durch Verwendung eines Produkts, das eine Höchstabmessung von 1,8 mm aufweist, umfassend folgende Stufen:
a) Einfüllen eines Wassergefäßes,
b) Positionieren eines Produktbehälters auf das Gefäß, wobei dieser Behälter mit einer mit dem Gefäß verbundenen Einlaßöffnung und einer Auslauföffnung versehen ist,
c) Anordnung eines Verteilungsmittels mit schraubenförmigen Einschnitten zwischen Einlaßöffnung und Behälter, so daß das vom Gefäß gelangende Druckwasser über das Produkt gleichmäßig verteilt wird.

2. Verfahren nach Anspruch 1, dadurch gekennzeichnet, daß zur Herstellung von Getränken ein Produkt wie Tee, Heilpflanzen, Gewürzkräuter, entwässertes Obst, Samen jeglicher Art, geröstete als auch ungeröstete, verwendet wird.

3. Verfahren nach Anspruch 1 und 2, dadurch gekennzeichnet, daß die genannten Stücke ein Ausmaß von mehr als 0,5 mm besitzen um das Vorhandensein von Pulver auszuschliessen.

4. Gerät zur Herstellung von Nahrung-, Medizin- und Diätgetränken, das ein Druckgefäß (1), einen Produktbehälter (2) mit einer mit dem Gefäß verbundenen Einlaßöffnung (2a) und eine Auslauföffnung umfaßt, dadurch gekennzeichnet, daß dieses ferner ein zwischen Einlaßöffnung und Behälter (2) angeordnetes Verteilungsmittel (3) besitzt, das mit schraubenförmigen Einschnitten (3a) versehen ist, so daß das vom Gefäß (1) ausfließende Wasser über die der Wassereinlaßöffnung (2a) zugewandte Oberfläche des Produkts gleichmäßig verteilt wird.

5. Gerät nach Anspruch 4, dadurch gekennzeichnet, daß am Oberteil des Behälters (2) ein Druckstück (4) für das Produkt vorgesehen ist.

6. Gerät nach Anspruch 5, dadurch gekennzeichnet, daß das Druckstück ein gelochtes Schreibchen (4) ist, worauf ein federndes Mittel (6) wirkt.

7. Gerät nach Anspruch 6, dadurch gekennzeichnet, daß das federnde Mittel eine verschwindbare Feder (6) ist, so daß sie einen gleichmäßigen Druck auf das zu extrahierende Produkt auswirkt.

8. Gerät nach einem der Ansprüche 4 bis 7, dadurch gekennzeichnet, daß das Druckstück (4) mit dem Verteilungsmittel (3) zusammenfällt.

## Revendications

1. Méthode pour obtenir des boissons alimentaires, médicinales et diététiques, grâce à l'emploi d'un produit ayant au maximum des dimensions d'1,8 mm., comprenant les phases suivantes:
a) on remplit d'eau un réservoir
b) on place sur le réservoir un récipient pour le produit, ledit réservoir étant muni d'un trou d'entrée relié au réservoir et d'un trou de sortie
c) on place un moyen de distribution avec incisions en hélice entre le trou d'entrée et le récipient, de sorte que l'eau sous pression qui arrive du réservoir soit distribuée sur le produit de façon uniforme.

2. Méthode selon la revendication 1, caractérisée en ce que pour la préparation de boissons on utilise un produit comme le thé, des herbes médicinales, des herbes aromatiques, des fruits déshydratés, des graines de n'importe quel genre, torréfiées et pas.

3. Méthode selon les revendications 1 et 2, caractérisée en ce que lesdites pièces ont des dimensions supérieures à 0,5 mm., afin que la présence de poussières soit exclue.

4. Appareil pour la préparation de boissons alimentaires, médicinales et diététiques, comprenant un réservoir (1) en pression, un récipient (2) pour le produit ayant un trou d'entrée (2a) relié au réservoir et un trou de sortie, caractérisé en ce qu'il comprend aussi un moyen distributeur (3), placé entre le trou d'entrée et le récipient (2), muni d'incisions en hélice (3a), afin que l'eau provenant du réservoir (1) se distribue de façon uniforme sur la surface du produit qui est tourné vers le trou d'entrée (2a) de l'eau.

5. Appareil selon la revendication 4, caractérisé en ce que sur la partie supérieure du récipient (2) pour le produit, un moyen presseur (4) a été prévu.

6. Appareil selon la revendication 5, caractérisé en ce que le moyen presseur est un petit disque perforé (4) sur lequel agit un moyen élastique (6).

7. Appareil selon la revendication 6, caractérisé en ce que le moyen élastique est un ressort escamotable (6) exerçant une pression uniforme sur le produit à extraire.

8. Appareil selon n'importe laquelle des revendications de 4 à 7, caractérisé en ce que le moyen presseur (4) coïncide avec le moyen distributeur (3).
